# EUROPEAN PATENT APPLICATION

(11) **EP 3 399 282 A1**
(43) Date of publication of application: **07.11.2018**
(21) Application number: 18173612.5
(22) Date of filing: 04.12.2015
(51) Int. Cl.: G01D 3/08, G01D 5/14, H02K 7/116, H02K 11/21, F02M 26/48, F02M 26/54, H02K 7/06, F02M 26/67, F16K 31/04, H05K 1/18

(54) **CONTACTLESS POSITION SENSOR WITH CIRCUIT STRUCTURE FOR SENSING THE POSITION OF A POINTER MOUNTED TO A MOVABLE PART**

(30) Priority: 04.12.2014 CN 201420754847 U
(62) Divisional of application: 15831228.0
(71) Applicant: Continental Automotive GmbH, 30165 Hannover (DE)
(72) Inventor: Cao, Xiangguang, Wuhu - Jiujiang, Anhui 241009 (CN); Zhao, Longsheng, Wuhu, Anhui 241009 (CN); Du, Xiaolin, Wuhu - Jiujiang, Anhui 241000 (CN); Song, Jingjing, Wuhu - Jiujiang District, Anhui 241006 (CN)

(57) **Abstract**

The present utility model relates to a sensor, a linear driving device, an exhaust gas recirculation control valve and an engine. The sensor (3) is used to detect the position of a movable part, and comprises a pointer (4) rigidly connected to the movable part and a circuit structure interacting with the pointer (4) . According to the present utility model, a component (13) of the circuit structure is arranged on the side of the circuit structure facing away from the pointer (4).

## Description

### Technical Field

The present utility model relates to a sensor, a linear driving device, an exhaust gas recirculation control valve, and an engine.

### Background Art

In industries such as the automotive industry, a valve device able to be precisely controlled is generally required, for example, an exhaust gas recirculation control valve for use in an engine exhaust gas recirculation system. In such a valve device, a linear driving device able to be precisely controlled is required, and it is desirable that this valve device can be as light as possible and miniaturized.

Such a linear driving device and valve device are disclosed in CN 203442281 U, for example. The current position of an output connecting rod is detected by a sensor and is transferred to a control device, so as to control the exhaust gas recirculation control valve.

However, when the whole connecting rod assembly rotates, a sensor pointer may also rotate, that is to say, a signal about a linear position may be interfered with by the rotation of the pointer. Hence, there is the problem of an imprecise sensor signal caused by the rotation of the connecting rod assembly.

### Summary of the Utility Model

The technical problem to be solved by the present utility model is that of providing a sensor, a linear driving device and a corresponding exhaust gas recirculation control valve, which solve the problem of an imprecise sensor signal caused by the rotation of the connecting rod assembly.

A sensor is proposed according to the present utility model, said sensor being used to detect the position of a movable part, and comprising a pointer rigidly connected to said movable part and a circuit structure interacting with the pointer, wherein a component of said circuit structure is arranged on the side of the circuit structure facing away from the pointer.

According to one preferred embodiment, said circuit structure is a printed circuit board. Further preferably, said pointer is rigidly connected to said movable part via a bracket. Further preferably, said pointer is fixed onto said bracket by insert molding. Further preferably, said bracket is fixed onto said movable part by insert molding. Further preferably, the end face of said pointer facing toward the circuit structure has a circular arc shape. Further preferably, said sensor is an inductive sensor.

A linear driving device is proposed according to the present utility model, comprising: an electric motor; a speed-reducing transmission stage comprising a pinion gear fixedly connected to an output shaft of the electric motor and a transmission gear meshing with the pinion gear; a linear transmission stage for transforming a rotational movement of said transmission gear into a linear movement of a movable part; and a sensor for detecting the position of said movable part, comprising a pointer rigidly connected to the movable part and a circuit structure interacting with the pointer, wherein a component of said circuit structure is arranged on the side of the circuit structure facing away from the pointer.

According to one preferred embodiment, said circuit structure is a printed circuit board. Further preferably, said pointer is rigidly connected to said movable part via a bracket. Further preferably, said pointer is fixed onto the bracket by insert molding. Further preferably, said bracket is fixed onto the movable part by insert molding. Further preferably, the end face of said pointer facing toward the circuit structure has a circular arc shape. Further preferably, said sensor is an inductive sensor. Further preferably, said transmission gear is a sector gear. Further preferably, said linear driving device comprises a restoring system for restoring without electricity, and said restoring system comprises a spring directly or indirectly applying a restoring action to the transmission gear.

The present utility model further relates to an exhaust gas recirculation control valve comprising the above-mentioned linear driving device, and to an engine comprising the exhaust gas recirculation control valve.

### Description of the Drawings

Fig. 1 shows a side view of a basic structure of a sensor according to the present utility model.
Fig. 2 shows a top view of the basic structure of the sensor according to the present utility model.
Fig. 3 shows a pointer and a printed circuit board of a sensor in the prior art, with the pointer not being displaced.
Fig. 4 shows the pointer and the printed circuit board of the sensor in the prior art, with the pointer being displaced.
Fig. 5 shows a pointer and a printed circuit board of a sensor according to the present utility model, with the pointer not being displaced.
Fig. 6 shows the pointer and the printed circuit board of the sensor according to the present utility model, with the pointer being displaced.
Fig. 7 shows a linear driving device according to the present utility model.

### Particular Embodiments

A sensor, a linear driving device, an exhaust gas recirculation control valve and an engine according to embodiments of the present utility model are described below with reference to the accompanying drawings. In the following description, many specific details are set forth in order to give those skilled in the art a more comprehensive understanding of the present utility model. However, it will be apparent to a person skilled in the art that the present utility model may be achieved without some of these specific details. In addition, it should be understood that the present utility model is not limited to the specific embodiments presented. Instead, it is envisaged herein that any combination of the following features and elements can be used to implement the present utility model, regardless of whether or not they are involved in different embodiments. Therefore, the following aspects, features, embodiments and advantages are merely illustrative and should not be regarded as elements or definitions of the claims, unless explicitly stated in the claims.

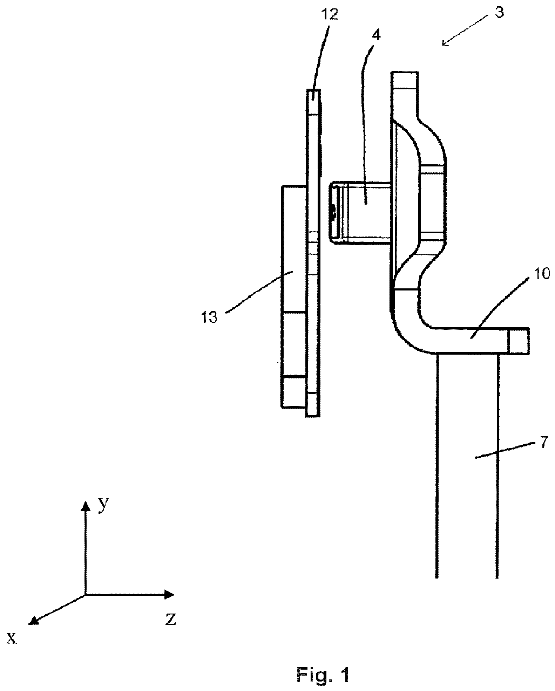

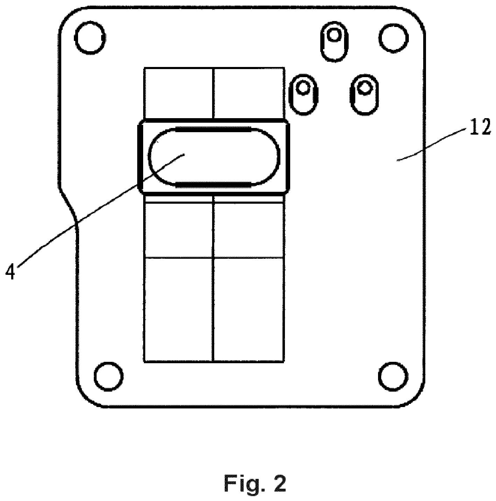

Figs. 1 and 2 show a basic structure of a sensor 3 for detecting the position of a movable part 7 according to the present utility model. The sensor 3 is an inductive sensor, which comprises a pointer 4 and a circuit structure, such as a printed circuit board 12. The pointer 4 is mounted onto the movable part 7 via a bracket 10 such as of plastic. During operation, the printed circuit board 12 is energized, and feedback voltages of the printed circuit board 12 are affected by the position of the pointer 4, such that a voltage signal representing the position of the pointer 4 is output.

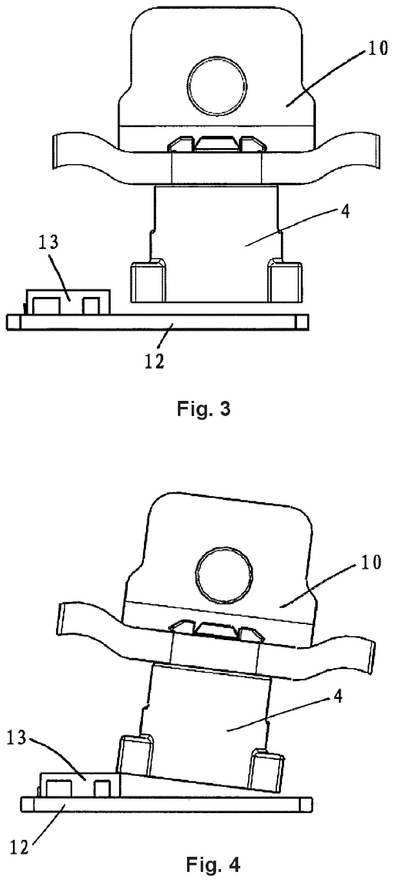

In the prior art, various components 13 of the printed circuit board 12 are usually arranged on the side of the printed circuit board 12 facing toward the pointer 4 (see Figs. 3 and 4) . The disadvantages of this solution lie in that the components 13 hinder the movement of the pointer 4 on the one hand, and scraping damage occurs on the other hand.

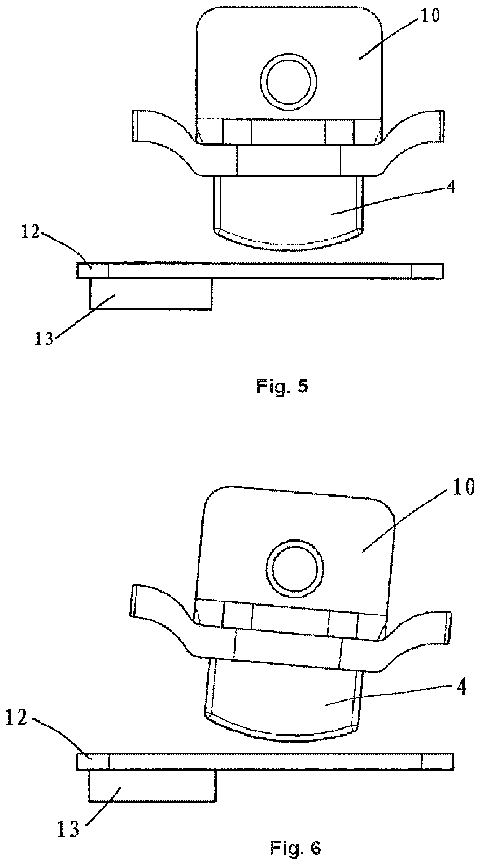

Therefore, the present utility model proposes that various components 13 of a printed circuit board 12 are arranged on the side of the printed circuit board 12 facing away from the pointer 4 (see Figs. 5 and 6), so that movement interference and scraping damage to the components are both avoided.

On the other hand, a pointer (see Figs. 3 and 4) with a planar end face is usually used in the prior art, but this pointer has the following disadvantages:
1. An output of the sensor 3 is the position where the pointer 4 moves in a y direction (see Fig. 1), but the output of the sensor 3 may be interfered with by a change in relative positions in x and z directions of the pointer 4 and the printed circuit board 12 of the sensor 3, such that the output of the sensor 3 may have errors with respect to the actual position in the y direction of the pointer 4; and in the existing solution of a planar pointer 4, after an executor programs, since the rotation of an adjusting rod cannot be avoided, a connecting rod and the pointer 4 fixed onto the connecting rod are deflected, so that within a sensing range, the relative positions in the x and z directions between the printed circuit board 12 of the sensor 3 and the pointer 4 are changed, and finally an error may thus occur between the output and the actual result.
2. The movable part rotating in a relatively large amplitude may also cause the pointer 4 to come into contact with and scrape the printed circuit board 12 of the sensor 3, destroying parts of the sensor 3, and the sensor 3 is thus damaged.
3. The existing pointer 4 is fixed to the movable part via a plastic member by means of interference press fit, snap-fitting or screwing, etc., but since the plastic member may fall off due to the effect of temperature, and severe environmental factors such as vibration, a signal problem occurs.
4. The existing pointer 4 is generally fixed to the plastics in an adhesive or printing method, but the process is complicated and has high costs.

Therefore, the present utility model proposes that the end face of the pointer 4 facing toward the printed circuit board 12 is arc-shaped, see Figs. 5 and 6. Since the end face is arc-shaped, the effect of the rotation of the connecting rod on a signal about the linear position is reduced, thereby errors between the output of the sensor 3 and the actual position of the pointer 4 are significantly reduced, and sensing accuracy is increased. Moreover, the arc-shaped pointer 4 allows the adjusting rod to rotate in a relatively large amplitude, without making contact with and scraping the sensor 3.

In addition, the pointer 4 is fixed using an insert molding method, for example, both the pointer 4 and the bracket 10 can be fixed by insert molding. Therefore, a simpler process, a higher reliability and lower costs are achieved.

Taking a linear driving device of an exhaust gas recirculation control valve for use in the engine exhaust gas recirculation as an example, the linear driving device according to the present utility model will be explained below, but the present utility model is not limited thereto. The linear driving device according to the present utility model can be used with any equipment requiring small precise linear control, such as a variety of valves and actuators.

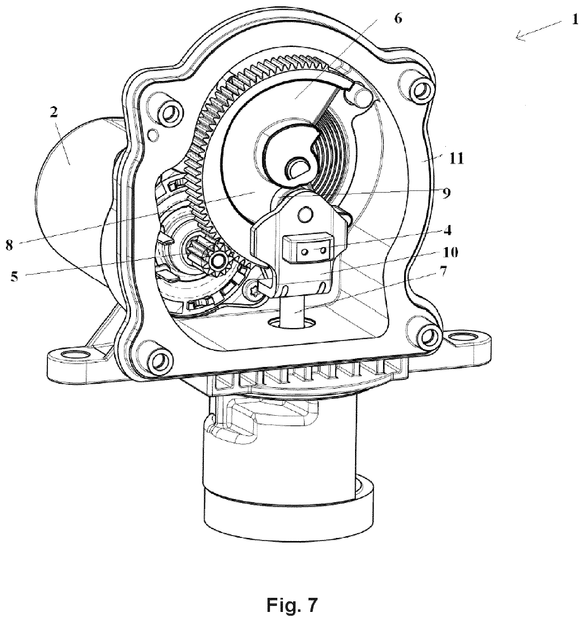

Fig. 7 shows a linear driving device. The linear driving device 1 comprises an electric motor 2, a first transmission stage (a speed-reducing transmission stage) and a second transmission stage (a linear transmission stage) . The linear driving device achieves a linear movement of a movable part 7 by means of the driving of the electric motor 2. Herein, the movable part can be designed to be an output connecting rod.

In order to avoid the ingress of dust or other foreign substances and consequent damage to the transmission device, a housing 11 and a corresponding sealing system are provided. The first transmission stage, i.e. the speed-reducing transmission stage, comprises a pinion gear 5 fixedly connected to an output shaft of the electric motor and a transmission gear 6 meshing with the pinion gear 5. When the motor 2 operates, the pinion gear 5 is driven to rotate, so that the transmission gear 6 meshing with the pinion gear 5 is rotated.

The second transmission stage is a linear transmission stage for transforming a rotational movement of the transmission gear 6 into a linear movement of the movable part 7. The second transmission stage comprises a spiral groove 8 formed on the transmission gear 6, a follower 9 received in the groove 8, and the movable part 7 fixedly connected to the follower 9.

The movable part 7 is arranged in a sleeve member (not shown), and is thus only able to linearly move up and down. When the transmission gear 6 rotates, the follower 9 is displaced along the groove 8, and owing to the spiral shape of the groove 8, the follower 9 moves up or down, thereby driving the movable part 7 to move up and down.

In order to enable the movable part 7 to return back to its initial position even if the electric motor 2 malfunctions or is de-energized, the linear transmission device preferably further comprises a restoring system for restoring without electricity, which is not shown. As is well known, when the electric motor is energized, the driving thereof in two opposite directions can achieve driving and restoring. However, when the electric motor is de-energized (for example, due to a failure or for other reasons), it is desirable that the transmission device can restore to the initial position, so that there is a need for such a restoring system. Said restoring system comprises a spring directly or indirectly applying a restoring action to the transmission gear 6.

The linear driving device 1 further comprises a sensor 3 according to the present utility model, which is used to detect the position of a movable part, i.e. the movable part 7, and to transfer the position to a control device so as to control the exhaust gas recirculation control valve.

While the present utility model has been disclosed above by means of the relatively preferred embodiments, the present utility model is not limited thereto. A variety of changes and modifications made by a person skilled in the art, without departing from the spirit and scope of the present utility model, should be included in the scope of protection of the present utility model, and thus the scope of protection of the present utility model should be defined by the claims.

### List of Reference Signs

- 1: Linear driving device
- 2: Electric motor
- 3: Sensor
- 4: Pointer
- 5: Pinion gear
- 6: Transmission gear
- 7: Movable part
- 8: Groove
- 9: Follower
- 10: Bracket
- 11: Housing
- 12: Printed circuit board
- 13: Component

## Claims

1. A linear driving device (1), comprising:
an electric motor (2);
a speed-reducing transmission stage comprising a pinion gear (5) fixedly connected to an output shaft of the electric motor and a transmission gear (6) meshing with the pinion gear (5);
a linear transmission stage for transforming a rotational movement of said transmission gear (6) into a linear movement of a movable part (7);
and a sensor (3) for detecting the position of said movable part (7), said sensor (3) comprising a pointer (4) rigidly connected to said movable part (7) and a circuit structure interacting with the pointer (4),
**characterized in that**,
a component (13) of said circuit structure is arranged on the side of the circuit structure facing away from the pointer (4).

2. The linear driving device according to claim 1, **characterized in that** said circuit structure is a printed circuit board (12).

3. The linear driving device according to claim 1, **characterized in that** said pointer (4) is rigidly connected to said movable part (7) via a bracket (10).

4. The linear driving device according to claim 3, **characterized in that** said pointer (4) is fixed onto said bracket (10) by insert molding.

5. The linear driving device according to claim 3, **characterized in that** said bracket (10) is fixed onto said movable part (7) by insert molding.

6. The linear driving device according to claim 1, **characterized in that** the end face of said pointer (4) facing toward the circuit structure has a circular arc shape.

7. The linear driving device according to claim 1, **characterized in that** said sensor (3) is an inductive sensor.

8. The linear driving device according to claim 1, **characterized in that** said transmission gear (6) is a sector gear.

9. The linear driving device according to claim 1, **characterized in that** said linear driving device comprises a restoring system for restoring without electricity, and said restoring system comprises a spring directly or indirectly applying a restoring action to the transmission gear (6).

10. An exhaust gas recirculation control valve for use in an exhaust gas recirculation loop of an engine, **characterized in that** it comprises a linear driving device (1) according to any one of claims 1-9.

11. An engine, comprising an exhaust gas recirculation control valve according to claim 10.
